# EUROPÄISCHE PATENTSCHRIFT

(11) **EP 2 251 650 B1**
(45) Veröffentlichungstag und Bekanntmachung des Hinweises auf die Patenterteilung: **10.12.2014**
(21) Anmeldenummer: 10159745.8
(22) Anmeldetag: 13.04.2010
(51) Int. Cl.: G01D 11/30

(54) **Manuell betätigbare Sensorschleuse**
Manually operated sensor gate
Porte à capteurs pouvant être actionnée manuellement

(30) Priorität: 08.05.2009 DE 102009020440
(43) Veröffentlichungstag der Anmeldung: 17.11.2010
(73) Patentinhaber: Knick Elektronische Messgeräte GmbH & Co. KG, 14163 Berlin (DE)
(72) Erfinder: Schiffer, Jens-Hendrik, 14480 Potsdam (DE)
(74) Vertreter: Hübner, Gerd

(56) Entgegenhaltungen:
- WO-A1-92/01218
- DE-C2- 10 019 991

## Beschreibung

Die Erfindung betrifft eine manuell betätigbare Sensorschleuse zum auswechselbaren Einbau von Messsensoren in Prozessbehältern mit den im Oberbegriff des Patentanspruchs 1 angegebenen Merkmalen.

Derartige Sensorschleusen sind z.B. aus der DE 100 19 991 C2 oder der WO 92/01218 A1 1 bekannt.

Zum Hintergrund der Erfindung ist festzuhalten, dass derartige Sensorschleusen, wie sie auf dem Gebiet der Prozessmesstechnik auch als "Wechselarmaturen" bezeichnet werden, an oder in Prozessbehälter, wie Tanks, Reaktoren, Röhren oder Leitungen zur Überwachung physikalischchemischer Parameter einer Prozessflüssigkeit, wie Temperatur, pH-Wert, Leitfähigkeit, Sauerstoffgehalt, optische Eigenschaften (Trübung), Druck und dergleichen eingebaut werden. Um die entsprechenden Messsensoren, die für sich oder in der Regel mit einem sie haltenden Tauchrohr eine Sensoreinheit bilden, zum Reinigen, Kalibrieren und/oder Wechseln unter Prozessbedingungen aus dem Prozess ohne dessen Unterbrechung herausziehen zu können, sind die Sensoreinheiten zwischen einer Mess- und einer gegenüber dem Prozess abgedichteten Wartungsposition manuell in axialer Richtung verschiebbar und in ihren Endlagen verriegelbar.

Diese durch offenkundige Vorbenutzung bekannten Schiebeschleusen sind in ihrer Bauart in der Regel von pneumatisch betätigten Schleusen abgeleitet. Problematisch bei diesem bekannten Schleusentyp sind die für die Verschiebung der Sensoreinheit aufzubringenden Kräfte insbesondere bei Druckverhältnissen im Prozess von über 4 bar. Beim Herausfahren der Sensoreinheit besteht zudem eine gewisse Verletzungsgefahr für den Bediener.

Zur Vermeidung der vorstehenden Nachteile ist es aus dem Stand der Technik bereits bekannt, die Verschiebung der Sensoreinheit zwischen der Messposition des Sensors im Prozess und einer Wartungsposition zum oben erwähnten Reinigen, Kalibrieren oder Wechseln des Sensors mithilfe eines spindelartigen Verschiebeantriebs für die Sensoreinheit vorzunehmen. Aus der oben bereits erwähnten DE 100 19 991 C2 ist eine entsprechende Vorrichtung zum dichten Ein- und Herausführen eines Messwertgebers in ein bzw. aus einem Messfluid in einem Rohr bekannt. Dort ist eine äußere, manuell drehbare Gewindehülse vorgesehen, in der ein Gewindekolben sitzt. Dieser steht in Eingriff mit der Gewindehülse und trägt die Sensoreinheit.

Durch ein entsprechendes Drehen der Gewindehülse wird der Gewindekolben im Inneren mit der Sensoreinheit auf und ab bewegt. Zwar wird damit vorteilhafterweise eine leichtgängige Betätigung der Sensoreinheit aufgrund der dem Spindelantrieb innewohnenden Übersetzung erreicht, was eine gute Einsatzmöglichkeit dieser manuell betätigbaren Sensorschleuse auch bei höheren Prozessdrücken gewährleistet. Problematisch ist hierbei allerdings die Tatsache, dass im Spindelantrieb ein herkömmliches eingängiges Gewinde in Form eines metrischen, Trapez- oder Sägezahngewindes eingesetzt wird, dessen Gewindesteigung üblicherweise im Bereich der Selbsthemmung, also in der Größenordnung von ca. 2 bis 5 mm liegt. Für den zum Ein- und Austauchen des Sensors typischerweise verlangten axialen Hub in einem Bereich von 60 bis 120 mm ist die Anzahl der notwendigen Umdrehungen der Gewindehülse also entsprechend hoch. Unter Heranziehung der vorstehend erwähnten Bereichsgrenzen ergibt sich eine Anzahl zwischen 12 und 60 Umdrehungen für den vollen Axialhub der Sensoreinheit. Dies macht das Überführen der Sensoreinheit zwischen Mess- und Wartungsposition (und umgekehrt) entsprechend mühselig und zeitaufwändig.

Der Erfindung liegt daher die Aufgabe zugrunde, eine manuell betätigbare Sensorschleuse mit spindelartigem Verschiebeantrieb für die Sensoreinheit so auszugestalten, dass Letzterer hinsichtlich einer leichteren, schnelleren Bedienung beim Hin- und Herfahren der Sensoreinheit verbessert wird.

Diese Aufgabe wird laut Kennzeichnungsteil des Anspruchs 1 dadurch gelöst, dass das Gewinde zwischen Gewindekolben und dem mit dem Gewindekolben in Eingriff stehenden Innengewinde an der Gewindehülse als mehrgängiges Gewinde ausgebildet ist. Die Mehrgängigkeit des Gewindes zwischen Gewindekolben und Gewindehülse führt zu einer deutlich erhöhten Gewindesteigung, sodass pro Umdrehung der Gewindehülse eine gegenüber dem Stand der Technik deutlich gesteigerte Axialverschiebung der Sensoreinheit erreicht wird. Bei gegebenem Axialhub verringert sich damit die Anzahl der notwendigen Umdrehungen der Gewindehülse je nach Gewindeauslegung deutlich. So hat beispielsweise ein sechsgängiges Gewinde mit einem Steigungswinkel von etwa 10° eine Steigung von 32 mm. Dies bedeutet, dass für einen Axialhub von 64 mm lediglich 2 Umdrehungen, bei einem Axialhub von 120 mm lediglich 3,75 Umdrehungen der Gewindehülse notwendig sind.

Die vordergründig relativ einfach erscheinende Verbesserung des Spindelantriebs durch die Verwendung eines mehrgängigen Gewindes ist tatsächlich in der Fachwelt als nicht gangbarer Weg zur Bedienungserleichterung angesehen worden. Der Grund hierfür liegt in der oberflächlichen Annahme, dass aufgrund der im Prozessbehälter herrschenden hohen Prozessdrücke von mehreren bar zur Überwindung der entsprechenden Kräfte insbesondere beim manuellen Einfahren der Sensoreinheit in dem Prozess eine hohe Übersetzung zu wählen ist. Bei der Entwicklung der vorliegenden Erfindung hat es sich allerdings überraschenderweise ergeben, dass die Betätigungskräfte deutlich stärker von den Reibungsbedingungen innerhalb der in den Sensorschleusen generell vorhandenen Dichtungsanordnungen sowie von der innerhalb des Verschiebeantriebs auftretenden Lagerreibung beispielsweise durch die Axiallagerung der Gewindehülse bestimmt sind. Insoweit sind die beim Stand der Technik in der Regel verwendeten Gewindeauslegungen mit Selbsthemmung überhaupt nicht notwendig, da die notwendige Selbsthemmung der gesamten Antriebseinheit durch die Reibung innerhalb der Dichtungen und Lagerungen der Gewindehülse generiert werden kann. Die im Gewinde und im Drucklager auftretende Reibung ist weitgehend von der Gewindesteigung unabhängig und wird vielmehr von den entsprechenden Reibkoeffizienten bestimmt. Dies hat zur Folge, dass das notwendige Drehmoment an der Gewindehülse zur Überwindung des entsprechenden Prozessdruckes auch bei Gewinden mit hohen Steigungswinkeln, wie dies bei mehrgängigen Gewinden der Fall ist, insbesondere verglichen zu dem zur Überwindung der Reibungsverluste notwendigen Drehmoment auch bei hohen Prozessdrücken von beispielsweise > 6 bar gering ist. Auch ist das durch die Axialabdichtung der Gewindehülse erzeugte Reibmoment unabhängig vom Prozessdruck.

Zusammenfassend führt ein Vergleich der im Spindelantrieb der Sensoreinheit auftretenden Reibungsverluste mit den notwendigen Übersetzungsverhältnissen zu einer Abkehr von der bisherigen landläufigen Meinung, den Spindelantrieb mit einem eingängigen Gewinde auszuführen.

Erfindungsgemäß ist das Innengewinde aus den vorstehenden Gründen ohne Selbsthemmung ausgelegt, da die Hemmung des Verschiebeantriebs über die beschriebene Reibung in Dichtungsanordnungen zwischen der Sensoreinheit sowie Basiskörper und/oder innerhalb des Verschiebeantriebs gewährleistet ist. Für eine leichtgängige Betätigung ist es somit von Vorteil, die Materialpaarungen im spindelartigen Verschiebeantrieb möglichst reibungsarm auszulegen, indem Gewindehülse und -kolben aus einem gut gleitfähigen Kunststoff, der beispielsweise Anteile von PTFE enthält, gefertigt sind.

Bevorzugte Ausführungsformen der Sensorschleuse sind in abhängigen Ansprüchen angegeben, deren Merkmale, Einzelheiten und Vorteile zur Vermeidung von Wiederholungen in der nachfolgenden Beschreibung des Ausführungsbeispiels anhand der beigefügten Zeichnungen näher erläutert werden. Es zeigen:
- Fig. 1: eine Seitenansicht einer Sensorschleuse in Messposition der Sensoreinheit, und
- Fig. 2 und 3: Axialschnitte der Sensorschleuse in Wartungs- bzw. Messposition der Sensoreinheit.

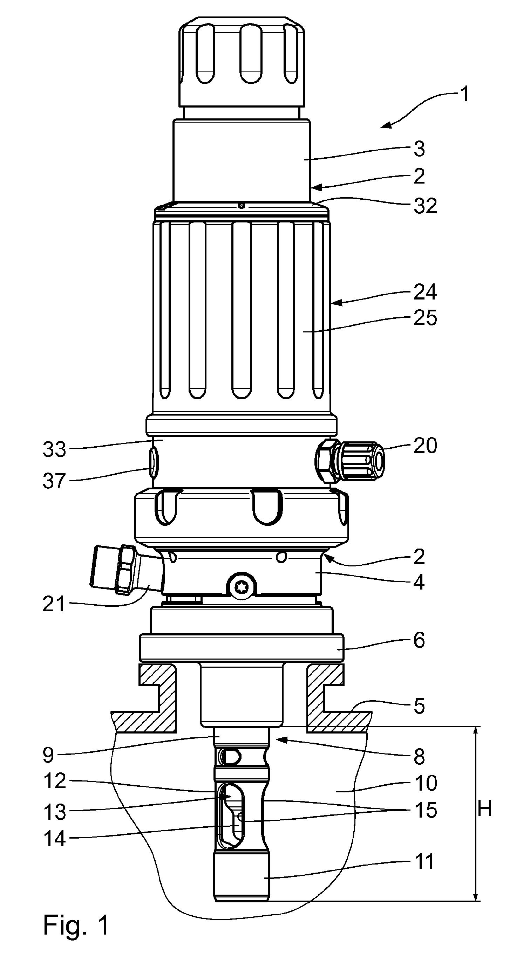

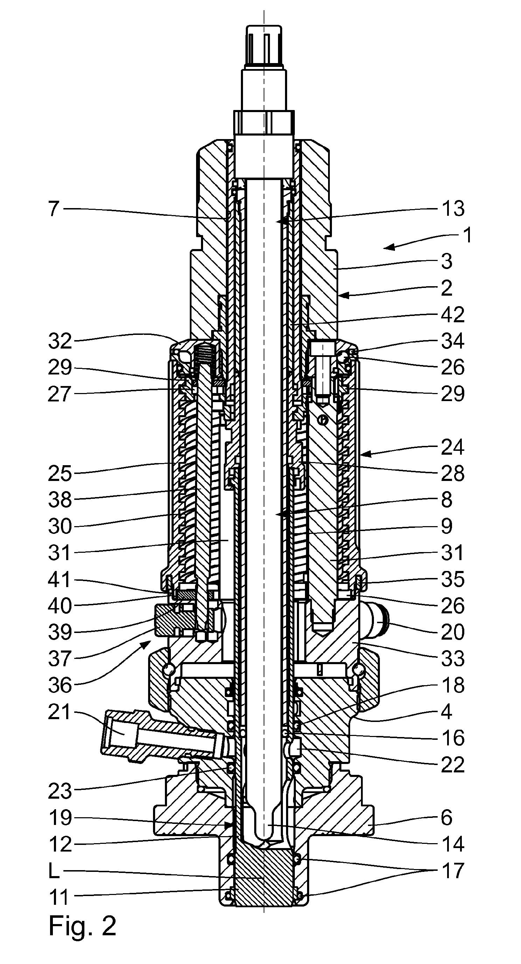

Wie aus Fig. 1 und 2 deutlich wird, weist die Sensorschleuse 1 einen als Ganzes mit 2 bezeichneten Basiskörper auf, der jeweils mehrteilig aus einem oberen, prozessfernen Abschnitt 3 und einem unteren, prozessseitigen Abschnitt 4 besteht. Letzterer weist auf seiner dem schematisch in Fig. 1 dargestellten Prozessbehälter 5 zugewandten Seite einen Ringflansch 6 auf, mit dem die Sensorschleuse 1 an dem Prozessbehälter 5 in üblicher, nicht näher dargestellter Weise befestigt werden kann.

Der Basiskörper 2 weist einen zylindrischen Führungskanal 7 auf, in dem eine als Ganzes mit 8 bezeichnete Sensoreinheit axial verschiebbar gelagert ist. Diese Sensoreinheit 8 besteht aus einem dem Führungskanal 7 im Außendurchmesser entsprechenden Tauchrohr 9, das an seinem in das Prozessfluid 10 (Fig. 1) eintauchbaren Frontende 11 einen Schutzzylinder 12 für einen Messsensor 13 bildet, der im Tauchrohr 9 und der prozessabseitig daran angesetzten Sensoraufnahme 42 gehalten ist. Die Messspitze 14 des Messsensors 13 ist dabei innerhalb eines vor dem Frontende 11 durchbrochenen Bereichs des Schutzzylinders 12 vor den damit gebildeten Spülöffnungen 15 angeordnet. Über diese Spülöffnungen 15 wird die Messspitze 14 des Messsensors 13 mit der jeweils anfallenden Flüssigkeit beaufschlagt, also während der eigentlichen Messung mit dem Prozessfluid 10 und währen der Reinigung mit den notwendigen Reinigungs- und Spüllösungen. Der Ringspalt zwischen Messsensor 13 und Tauchrohr 9 ist dabei durch einen hinter der Messspitze 14 gelegenen O-Ring 16 abgedichtet.

Im unteren Teil 4 des Basiskörpers 2 ist zwischen prozessseitigen Dichtringen 17 und einem rückwärtigen, inneren Dichtring 18 eine Spülkammer 19 angelegt, die zwischen Tauchrohr 9 und Führungskanal 7 ausgebildet ist. Zur Zuführung von Reinigungs- und Spüllösungen zu dieser Spülkammer 19 ist ein Anschlussstutzen 20 vorgesehen, der über nicht näher dargestellte Zulaufkanäle mit der Spülkammer 19 verbunden ist. Zum Ableiten der genannten Lösungen aus der Spülkammer 19 ist eine Abflussleitung 21 vorgesehen, die über einen Ringkanal 22 an die Spülkammer 19 angebunden ist. Zwischen diesem Ringkanal 22 und der Spülkammer 19 ist noch ein Zwischendichtring 23 angeordnet, dessen Funktion zusammen mit den weiteren Dichtringen 17, 18 sowie der Formgebung der Spülkammer 19 und des Ringkanals 22 Stand der Technik und Gegenstand der DE 10 2006 022 983 ist, hier also keiner vertieften Erörterung bedarf.

Wie insbesondere aus Fig. 2 hervorgeht, ist zwischen dem oberen Abschnitt 3 und dem unteren Abschnitt 4 des Basiskörpers 2 ein als Ganzes mit 24 bezeichneter spindelartiger Verschiebeantrieb für die Sensoreinheit 8 vorgesehen. Dieser weist eine äußere, manuell drehbare Gewindehülse 25 auf, die über Axialkugellager 26 zwischen dem oberen Teil 3 und dem unteren Teil 4 des Basiskörpers 2 um die Längsachse L der Sensoreinheit 8 drehbar gelagert ist.

In der Gewindehülse 25 ist ein in Richtung der Längsachse L flacher Gewindekolben 27 angeordnet, der mit der hülsenartigen Tauchrohraufnahme 28 fest verbunden ist. Dieser Gewindekolben 27 steht über kurze Gewindesegmente 29 an seinem Außenumfang mit dem Innengewinde 30 an der Gewindehülse 25 in Eingriff. Er ist mittels dreier parallel zur Längsachse L zwischen Gewindehülse 25 und Sensoreinheit 8 verlaufender Axialstangen 31 axial geführt und verdrehgesichert. Die drei Axialstangen 31 sind gleichmäßig um die Längsachse L verteilt, in Fig. 2 ist eine Axialstange 31 im Schnitt erkennbar, eine zweite Axialstange 31 erscheint in Seitenansicht links von der Sensoreinheit 8 in dieser Zeichnung. Die Axialstangen 31 durchdringen den Gewindekolben 27 jeweils über entsprechende Öffnungen und dienen gleichzeitig nach Art eines Käfigs zur starren Verbindung zwischen oberem und unterem Abschnitt 3, 4 des Basiskörpers 2. Die Axialstangen 31 bilden damit Koppelelemente des Basiskörpers 2 zur starren Verbindung der beiderseits der Gewindehülse 25 angeordneten Lagerköpfe 32, 33 für die Gewindehülse 25. Zwischen diesen Lagerköpfen 32, 33 und der Gewindehülse 25 sind ferner Ringdichtungen 34, 35 angeordnet.

Das Innengewinde 30 der Gewindehülse 25 ist als 6-gängiges Gewinde ausgeführt, dessen Steigungswinkel 10° beträgt. Das Gewinde zeigt somit beispielsweise eine Steigung S von 32 mm, was bedeutet, dass ein Hub H (siehe Fig. 1) der Sensoreinheit 8 von beispielsweise 64 mm mit nur zwei Umdrehungen der Gewindehülse 25 realisierbar ist. Aufgrund der Gewindeauslegung und der Materialpaarung zwischen Gewindehülse 25 und Gewindekolben 27 beispielsweise aus hoch-gleitfähigen Kunststoffmaterialien, wie sie unter Verwendung von PTFE-Werkstoffen bekannt sind, ist die Gewindekopplung zwischen Innengewinde 30 und Gewindesegmenten 29 ohne Selbsthemmung ausgeführt. Die Hemmung des Verschiebeantriebs 24 wird im Wesentlichen über die Reibung in den Dichtungsanordnungen der Dichtringe 17, 18, 23 zwischen der Sensoreinheit 8 und dem Basiskörper 2 sowie durch die Reibung der Ringdichtungen 34, 35 zur Abdichtung der Gewindehülse 25 erzeugt.

Die Gewindehülse 25 ist schließlich durch eine Verriegelungseinrichtung 36 in ihrer Drehbewegung blockierbar, sodass eine unbeabsichtigte Verschiebung der Sensoreinheit 8 zuverlässig verhindert wird. Diese Verriegelungseinrichtung 36 besteht im Wesentlichen aus einem radial im unteren Lagerkopf 36 des prozessseitigen Abschnitts 4 des Basiskörpers 2 verschiebbar gelagerten Druckknopf 37, der über eine Riegelstange 38 mit einem ebenfalls radial am unteren Ende der Gewindehülse 25 verschiebbaren Riegel 39 gekoppelt ist. Letzterer weist an seiner radial nach außen weisenden Kante Rastzähne 40 auf, die mit einer entsprechenden Innenverzahnung 41 am unteren Ende der Gewindehülse 25 in Eingriff bringbar ist. Die Riegelstange 38 verläuft parallel zu den Axialstangen 31 nach oben und ist dort im Lagerkopf 32 federnd gegengelagert.

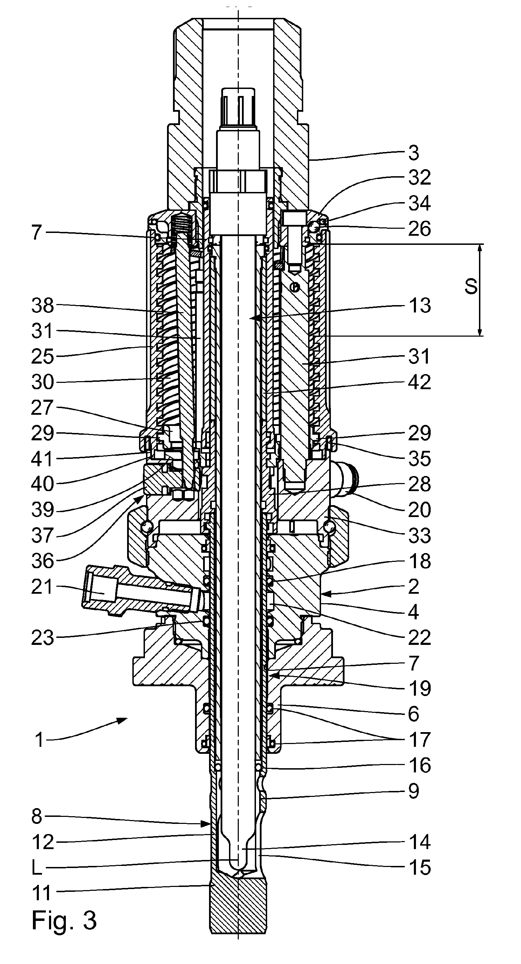

Zum Führen der Sensoreinheit 8 aus der in Fig. 2 gezeigten Wartungsposition in die in Fig. 1 und 3 gezeigte Messposition ist ausgehend von der Stellung in Fig. 2 der Druckknopf 37 radial nach innen zu drücken. Damit wird das untere Ende der Riegelstange 38 radial nach innen geführt und der damit gekoppelte Riegel 39 entsprechend mit seinem Rastzähnen 40 nach innen außer Eingriff mit der Innenverzahnung 41 gebracht. Damit ist die Gewindehülse 25 drehbar. Durch deren Drehung wird der Gewindekolben 27 nach Art eines Spindeltriebes nach unten verschoben, sodass die mit ihm gekoppelte Sensoreinheit 8 ebenfalls nach unten aus dem Basiskörper 2 ausgeschoben und in den Prozessbehälter 5 eingetaucht wird. In dieser Position kann der Druckknopf 37 durch eine nicht näher dargestellte Druckfeder in seine Ausgangsposition radial nach außen verschoben werden, sodass der Riegel 39 wieder in Eingriff mit der Innenverzahnung 41 der Gewindehülse 25 gelangt.

## Patentansprüche

1. Manuell betätigbare Sensorschleuse zum auswechselbaren Einbau von Messsensoren in Prozessbehälter, umfassend
- einen Basiskörper (2), der mit einem Prozessbehälter (5) verbindbar ist,
- eine im Basiskörper (2) verschiebbar gelagerte Sensoreinheit (8), die vorzugsweise aus einem Tauchrohr (9) mit einem darin gehaltenen Messsensor (13) besteht und die zwischen einer Messposition und einer Wartungsposition verschiebbar sind,
- einen spindelartigen Verschiebeantrieb (24) für die Sensoreinheit (8), umfassend eine äußere, manuell drehbare Gewindehülse (25) und einen darin sitzenden, damit in Eingriff stehenden Gewindekolben (27), an dem die Sensoreinheit (8) angeordnet ist, und
- ein mit dem Gewindekolben (27) in Eingriff stehendes Innengewinde (30) an der Gewindehülse (25),
**dadurch gekennzeichnet, dass** das von deren Innengewinde (30) und dem Gewindekolben (27) gebildete Gewinde als mehrgängiges Gewinde ausgebildet sowie ohne Selbsthemmung ausgelegt ist und die Hemmung des Verschiebeantriebes (24) über die Reibung in Dichtungsanordnungen (17, 18, 23; 34, 35) zwischen Sensoreinheit (8) sowie Basiskörper (2) und/oder innerhalb des Verschiebeantriebes (24) erzeugt ist.

2. Sensorschleuse nach Anspruch 1, **dadurch gekennzeichnet, dass** das Innengewinde (30) mindestens dreigängig, vorzugsweise sechsgängig, mit einem Steigungswinkel von größer 8° ausgelegt ist.

3. Sensorschleuse nach Anspruch 1 oder 2, **dadurch gekennzeichnet, dass** die Dichtungsanordnungen innerhalb des Verschiebeantriebes (24) durch stirnseitige Ringdichtungen (34, 35) im Bereich der Axiallager (26) der Gewindehülse (25) gebildet sind.

4. Sensorschleuse nach einem der vorgenannten Ansprüche, **dadurch gekennzeichnet, dass** der Gewindekolben (27) innerhalb der Gewindehülse (25) axial geführt und verdrehgesichert ist.

5. Sensorschleuse nach Anspruch 4, **dadurch gekennzeichnet, dass** die Verdrehsicherung des Gewindekolbens (27) durch diesen durchdringende Axialstangen (31) im Basiskörper (2) gebildet ist.

6. Sensorschleuse nach Anspruch 5, **dadurch gekennzeichnet, dass** die Axialstangen (31) Koppelelemente des Basisträgers (2) zur starren Verbindung der beiderseits der Gewindehülse (25) angeordneten Lagerköpfe (32, 33) für diese bilden.

7. Sensorschleuse nach einem der vorgenannten Ansprüche, **dadurch gekennzeichnet, dass** die Gewindehülse (25) durch eine Verriegelungseinrichtung (36) in ihrer Drehbewegung blockierbar ist.

8. Sensorschleuse nach Anspruch 7, **dadurch gekennzeichnet, dass** die Verriegelungseinrichtung (36) durch eine radiale Innenverzahnung (41) an der Innenseite der Gewindehülse (25) und einem damit lösbar in Eingriff stehenden Riegel (39) gebildet ist.

9. Sensorschleuse nach Anspruch 8, **dadurch gekennzeichnet, dass** der Riegel (39) durch einen radial verschiebbaren Druckknopf (37) im Basiskörper (2) betätigbar ist.

## Claims

1. Manually operable sensor gate allowing measuring sensors to be exchangeably installed in a process receptacle, comprising
- a base body (2) which is connectable with a process receptacle (5);
- a sensor unit (8) mounted for displacement in the base body (2), the sensor unit (8) preferably consisting of an immersion tube (9) and a measuring sensor (13) held therein which are displaceable between a measuring position and a maintenance position,
- a spindle-type displacement drive (24) for the sensor unit (8), comprising an outer, manually rotatable threaded sleeve (25) and a threaded piston (27) disposed in the threaded sleeve (25) with which it is in engagement, the sensor unit (8) being mounted to said threaded piston (27), and
- an internal thread (30) of the threaded sleeve (25) which is in engagement with the threaded piston (27),
**characterized in that** the thread formed by the internal thread (30) thereof and the threaded piston (27) is configured as a non self-locking multiple-pitch thread, and the locking of the displacement drive (24) is produced by the friction in sealing arrangements (17, 18, 23; 34, 35) between sensor unit (8) and base body (2) and/or inside the displacement drive (24).

2. Sensor gate according to claim 1, **characterized in that** the internal thread (30) has at least three pitches, preferably six pitches, the pitches having a pitch angle of greater than 8°.

3. Sensor gate according to claim 1 or 2, **characterized in that** the sealing arrangements are formed inside the displacement drive (24) by front-end ring seals (34, 35) in the region of the axial bearings (26) of the threaded sleeve (25).

4. Sensor gate according to one of the preceding claims, **characterized in that** the threaded piston (27) is axially guided and protected against rotation inside the threaded sleeve (25).

5. Sensor gate according to claim 4, **characterized in that** the anti-rotation protection of the threaded piston (27) is formed by axial rods (31) in the base body (2) passing through said threaded piston (27).

6. Sensor gate according to claim 5, **characterized in that** the axial rods (31) form coupling members of the base carrier (2) for rigidly connecting the bearing heads (32, 33) for said sensor gate, the bearing heads (32, 33) being arranged at both sides of the threaded sleeve (25).

7. Sensor gate according to one of the preceding claims, **characterized in that** the threaded sleeve (25) is lockable against rotational movement by a locking device (36).

8. Sensor gate according to claim 7, **characterized in that** the locking device (36) is formed by radial internal teeth (41) provided on the inside of the threaded sleeve (25) and a latch (39) which is detachably engaged therewith.

9. Sensor gate according to claim 8, **characterized in that** the latch (39) is actuable by a radially displaceable push-button (37) in the base body (2).

## Revendications

1. Porte à capteurs pouvant être actionnée manuellement pour une implantation interchangeable de capteurs de mesure dans des récipients de processus, comprenant
- un corps de base (2) qui peut être relié avec un récipient de processus (5),
- un ensemble de capteurs (8), logé, tout en pouvant être coulissé, dans le corps de base (2), de préférence constitué par un tube plongeur (9) comprenant un capteur de mesure (13) à l'intérieur, et qui peut être déplacé entre une position de mesure et une position de maintenance,
- une commande de coulissement (24), en forme de tige, pour l'ensemble de capteurs (8), comprenant un canon taraudé (25) externe, pouvant être mis en rotation manuellement, et un fût fileté (27), étant logé à l'intérieur, mis en prise avec lui, sur lequel l'ensemble de capteurs (8) est agencé, et
- un filetage interne (30), mis en prise avec le fût fileté (27) sur le canon taraudé (25),
**caractérisée en ce que** le filetage formé par les filetages internes (30) et le fût fileté (27) est conçu sous la forme d'un filetage à plusieurs pas, ainsi que sans auto-inhibition, et l'inhibition de la commande de coulissement (24) est générée par le frottement dans des garnitures d'étanchéité (17, 18, 23 ; 34, 35) entre l'ensemble de capteurs (8) ainsi qu'entre le corps de base (2) et/ou à l'intérieur de la commande de coulissement (24).

2. Porte à capteurs selon la revendication 1, **caractérisée en ce que** le filetage interne (30) est conçu à au moins trois pas, de préférence, à six pas, avec un angle d'inclinaison supérieur à 8 °.

3. Porte à capteurs selon les revendications 1 ou 2, **caractérisée en ce que** les garnitures d'étanchéité sont formées à l'intérieur de la commande de coulissement (24) par des joints toriques (34, 35) du côté frontal dans la zone des paliers axiaux (26) du canon taraudé (25).

4. Porte à capteurs selon l'une des revendications précitées, **caractérisée en ce que** le fût fileté (27) est conduit axialement à l'intérieur du canon taraudé (25) et est sécurisé vis-à-vis d'une rotation.

5. Porte à capteurs selon la revendication 4, **caractérisée en ce que** la sécurisation vis-à-vis de la rotation du fût fileté (27) est formée par des tiges axiales (31)) traversant celui-ci dans le corps de base (2).

6. Porte à capteurs selon la revendication 5, **caractérisée en ce que** les tiges axiales (31) forment des éléments de couplage du support de base (2) pour une liaison rigide des têtes de palier (32, 33) disposées des deux côtés du canon taraudé (25).

7. Porte à capteurs selon l'une des revendications précitées, **caractérisée en ce que** le canon taraudé (25) peut être bloqué dans son mouvement de rotation par un système de verrouillage (36).

8. Porte à capteurs selon la revendication 7, **caractérisée en ce que** le système de verrouillage (36) est formé par une indentation interne (41) sur la face interne du canon taraudé (25) et un verrou (39) pouvant venir en prise de manière amovible.

9. Porte à capteurs selon la revendication 8, **caractérisée en ce que** le verrou (39) peut être actionné par un bouton poussoir (37) pouvant se déplacer radialement dans le corps de base (2).
